# EUROPEAN PATENT APPLICATION

(11) **EP 2 581 125 A1**
(43) Date of publication of application: **17.04.2013**
(21) Application number: 12187665.0
(22) Date of filing: 08.10.2012
(51) Int. Cl.: B01D 46/04, B01D 46/42, B01D 46/00, F23J 3/02, F28G 7/00, G10K 1/06

(54) **Device and method for cleaning baghouse filters**

(30) Priority: 14.10.2011 US 201113273953
(71) Applicant: General Electric Company, Schenectady, NY 12345 (US)
(72) Inventor: Zhang, Tian Xuan, Raytown, MO 64133 (US); Chapin, David Michael, Evendale, OH 45241 (US)
(74) Representative: Picker, Madeline Margaret

(57) **Abstract**

A device and method for cleaning baghouse filters using a shock wave vortex is disclosed. In one embodiment, high pressure fluid enters the housing of the device through an inlet tube in axial alignment with a resonance chamber within the housing. The high pressure fluid enters and exits a resonance chamber causing a collision with the fluid from the inlet tube to generate a shock wave. The shock wave is directed downward by the housing through the lower opening of the housing and towards a baghouse filter as a ring-shaped shock wave vortex. The ring-shaped shock wave vortex concentrates cleaning energy along the side material of the baghouse filter.

## Description

### BACKGROUND OF THE INVENTION

The subject matter disclosed herein generally relates to a device and method for cleaning baghouse filters, and more specifically, to utilizing sound waves for cleaning baghouse filters.

Baghouse filters are used to filter and separate particulate matter (e.g., dust, debris, ash, dirt, etc.) from gases that pass through the baghouse filter as the particulate matter sticks to the exterior of the baghouse. Baghouse filters are generally made from woven or felted cotton, synthetic, or glass-fiber material. While many shapes of filters are possible, the most common are tube and envelope shaped structures. As particulate matter accumulates on the baghouse filters it is necessary to clean the filters by removing the particular matter to continue effective cleaning by the baghouse. Common methods for cleaning baghouse filters include shaking, reversing air flow periodically and using pulsed jets of compressed air down the inside of the bag to remove deposits on the outside of the bag, with pulse jet being the more commonly used method for new baghouses.

Pulse jet cleaning utilizes a high pressure blast of air to remove particulate matter from the baghouse. The blast of air enters the top of the filter bag, temporarily ceasing the flow of contaminated air. The blast of air causes a wave of expansion that travels down the fabric to flex the bag and to shatter and discharge accumulated particulate matter. Generally a short burst of air, such as a 0.1 second pulse is used. Because of the rapid release of air, the pulse jet does not interfere with contaminated gas flow. Therefore, using pulse jet to clean a baghouse filter allows the baghouses to operate continuously without the need to shut down operation of the system to clean the filter.

Pulse jet cleaning methods utilize a large amount of compressed air to generate the required force needed to sufficiently clean the baghouse filter. The burst of air created by the pulse jet increases the risk that the filters will tear.

The discussion above is merely provided for general background information and is not intended to be used as an aid in determining the scope of the claimed subject matter.

### BRIEF DESCRIPTION OF THE INVENTION

A device and method for cleaning baghouse filters using a shock wave vortex is disclosed. In one embodiment, high pressure fluid enters the housing of the device through an inlet tube in axial alignment with a resonance chamber within the housing. The high pressure fluid enters and exits a resonance chamber causing a collision with the fluid from the inlet tube to generate a shock wave. The shock wave is directed downward by the housing through the lower opening of the housing and towards a baghouse filter as a ring-shaped shock wave vortex. The ring shaped shock wave vortex concentrates cleaning energy along the side material of the baghouse filter.

An advantage that may be realized in the practice of some disclosed embodiments of the baghouse cleaning device is that a more efficient cleaning utilizing less air and with less risk of bag tear can be achieved.

In one example embodiment, a baghouse filter cleaning device is disclosed. The baghouse filter cleaning comprises a housing with a focusing surface and a lower opening, an inlet tube configured to transfer high pressure fluid to the housing, and a resonance chamber comprising an opening and a bottom surface, being located within the housing, and also being axially aligned with and spaced apart from the inlet tube forming a gap between the inlet tube and the resonance chamber. The high pressure fluid delivered from the inlet tube enters and exits the resonance chamber in a oscillating manner to generate a shock wave proximate the gap. A housing has a focusing surface configured to direct the shock wave downward around the resonance chamber and through the lower opening to form a ring-shaped shock wave vortex.

In another example embodiment, a baghouse filter cleaning system comprises a source of high pressure fluid, a manifold to deliver the high pressure fluid, at least one filter, and at least one acoustic generator connected to the manifold that is positioned proximate the filter. The acoustic generator comprises a housing with a focusing surface and a lower opening, an inlet tube configured to transfer high pressure fluid to the housing, a resonance chamber comprising an opening and bottom surface, being located within the housing, and also being axially aligned with and spaced apart from the inlet tube forming a gap between the inlet tube and the resonance chamber. The high pressure fluid delivered from the inlet tube enters and exits the resonance chamber in an oscillating manner to generate a shock wave proximate the gap. A housing has a focusing surface configured to direct the shock wave downward around the resonance chamber and through the lower opening to form a ring-shaped shock wave vortex.

In another example embodiment, a method for cleaning a baghouse filter is disclosed. In the method, high pressure fluid is delivered to the housing via the inlet tube such that the high pressure fluid enters and exits the resonance chamber to generate a shock wave proximate the gap. The focusing surface of the housing directs the shock wave downward past the resonance chamber and through the lower opening to form a ring-shaped shock wave vortex. The ring-shaped shock wave vortex travels to a bag house filter thereby cleaning the filter.

This brief description of the invention is intended only to provide a brief overview of subject matter disclosed herein according to one or more illustrative embodiments, and does not serve as a guide to interpreting the claims or to define or limit the scope of the invention, which is defined only by the appended claims. This brief description is provided to introduce an illustrative selection of concepts in a simplified form that are further described below in the detailed description. This brief description is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

So that the manner in which the features of the invention can be understood, a detailed description of the invention may be had by reference to certain embodiments, some of which are illustrated in the accompanying drawings. It is to be noted, however, that the drawings illustrate only certain embodiments of this invention and are therefore not to be considered limiting of its scope, for the scope of the invention encompasses other equally effective embodiments. The drawings are not necessarily to scale, emphasis generally being placed upon illustrating the features of certain embodiments of invention. In the drawings, like numerals are used to indicate like parts throughout the various views. Thus, for further understanding of the invention, reference can be made to the following detailed description, read in connection with the drawings in which:
FIG. 1 is an example baghouse cleaning system;
FIG. 2 is an expanded view of the acoustic generator shown in FIG. 1; and
FIG. 3 is a flow diagram of a method of cleaning a bag house filter.

### DETAILED DESCRIPTION OF EMBODIMENTS OF THE INVENTION

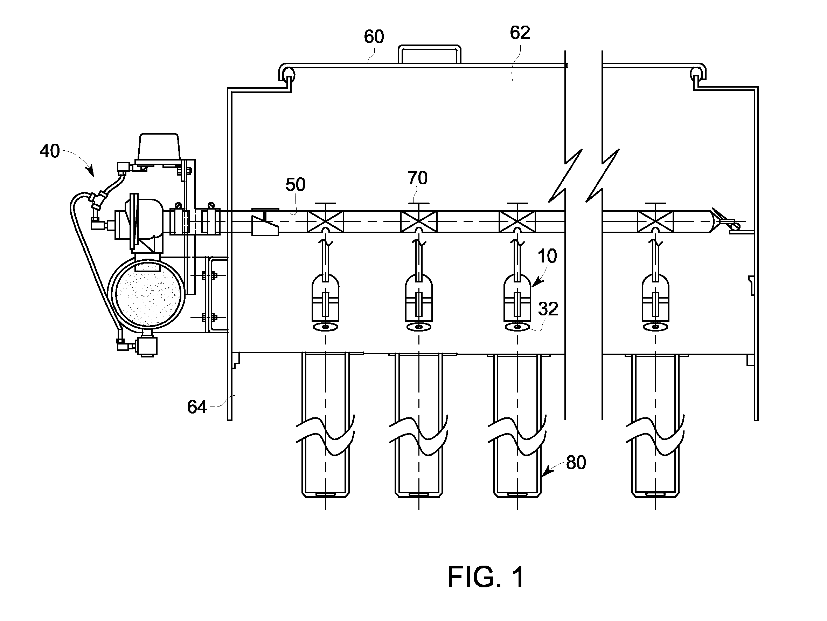

FIG. 1 is an example baghouse cleaning system according to one embodiment. An acoustic generator 10 is connected in line to a high pressure fluid system. The acoustic generator 10 utilizes high pressure fluid to create a ring-shaped shock wave vortex 32 that is directed towards a baghouse filter 80. The ring-shaped shock wave vortex 32 cleans accumulated particulate matter off of the baghouse filter 80. The acoustic generator 10 can be integrated into existing pulse jet cleaning systems or can be designed to be used with new systems for cleaning baghouse filters 80.

A high pressure fluid source 40 (e.g., a compressor or receiver tank, etc.) generates the high pressure fluid used by the system. The high pressure fluid is delivered from the high pressure fluid source 40 to a manifold 50 by any suitable tubing or piping sufficient to deliver high pressure fluid within an enclosed area 60. The manifold 50 can have any number of connections within or outside the enclosed area 60.

The enclosed area 60 has a clean area 62 and a contaminated area 64. Contaminated air is located in the contaminated area 64 and contains particulate matter that is passed through the baghouse filters 80. The particulate matter is removed from the air and clean air is exhausted into the clean area 62. As the filter 80 continues to remove particulate matter from the contaminated air, that particulate matter builds up on the baghouse filter 80 and requires cleaning. It is understood that any number of filters 80 can be connected.

To remove the built up particulate matter on the baghouse filter 80, the high pressure fluid is delivered from the manifold 50 to an acoustic generator 10. The acoustic generator 10 converts the high pressure fluid into a ring-shaped shock wave vortex 32 and directs that ring-shaped shock wave vortex 32 towards the baghouse filter 80. In one embodiment, the ring-shaped shock wave vortex 32 can oscillate at a frequency in between 40 Hz and 1000 Hz. In another embodiment, the ring-shaped shock wave vortex 32 can oscillate at a frequency in between 50 Hz and 400 Hz. In yet another embodiment, the ring-shaped shock wave vortex 32 oscillates at a frequency optimized to clean a baghouse filter having a particular diameter, length and shape. The energy of the ring-shaped shock wave vortex 32 is sufficient to break loose the built up particulate matter and allow the filter 80 to continue to run at higher efficiency. It is understood that the while the acoustic generator is depicted as being above the baghouse filter 80, that in other embodiments the acoustic generator 10 can be positioned in other positions proximate the baghouse filter 80, such as on the side of the filter 80 or below the filter 80.

Optionally, a valve 70 is installed to regulate the flow of high pressure fluid to the acoustic generator 10. The valve 70 may be installed near the acoustic generator 10 as shown in FIG. 1, or it may be installed in-line with the manifold 50 so that a single valve 70 controls the air flow to a number of acoustic generators 10. In one embodiment, the valve 70 is a variable valve to allow fine tuning of the air pressure. In another embodiment, the valve 70 is a two-way valve allowing the air flow to either be on or off.

While the embodiment shown in FIG. 1 depicts a single acoustic generator 10 above each baghouse filter 80, it is understood that multiple acoustic generators 10 could be positioned proximate near or within each filter 80 to provide additional cleaning capabilities.

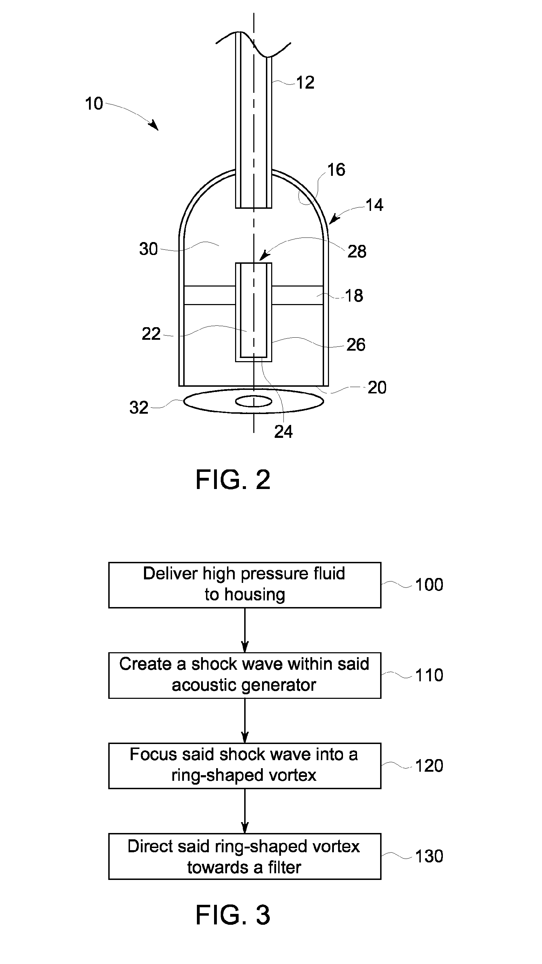

Referring now to FIG. 2, there is shown an enlarged view of the acoustic generator 10 depicted in FIG. 1. The inlet tube 12 enters a housing 14 to deliver high pressure fluid. The housing 14 has at least one chamber support 18 that extends from the housing 14 to a resonance chamber 22. The resonance chamber 22 is aligned with and positioned below the inlet tube 12 to form a gap 30.

High pressure fluid is delivered to the acoustic generator 10 via the inlet tube 12. The inlet tube 12 may be of any suitable size and shape to transfer the high pressure fluid. Upon entering the housing 14, the high pressure fluid is directed into the resonance chamber 22. The high pressure fluid enters the resonance chamber opening 28, travels downward along the continuous surface 26, and strikes the bottom surface 24.

While the high pressure fluid continues to flow from the inlet pipe 12, the pressure within the resonance chamber 22 goes through an oscillation cycle characterized by two primary phases. First, the pressure increases within the resonance chamber 22. Second, pressure is discharged from the resonance chamber opening 28 of the resonance chamber 22. This discharge of pressure from the resonance chamber 22 allows the cycle to begin again. The frequency of the oscillation cycle is dependent on a number of variables. These variables include but are not limited to the resonance chamber 22 diameter, the resonance chamber 22 length, the resonance chamber 22 volume, the size of the gap 30, and the pressure of the high pressure fluid. In one embodiment, the resonance chamber 22 is a tube with a diameter that is at least 90% of the diameter of the inlet tube 12. Adjustment to these variables permits a user to adjust the frequency and intensity of the shock wave. For example, increasing the pressure of flow of the high pressure fluid increases the intensity of the shock wave, however to maintain a predetermined frequency for the application, other variables may also need to be adjusted.

The high pressure fluid entering the housing 14 out of the inlet pipe 12 collides with the discharged high pressure fluid exiting the resonance chamber opening 28 proximate the gap 30. This collision of high pressure fluids causes a shock wave to disperse radially proximate the gap 30. The motion of the shock wave is driven by the periodic nature of the high pressure fluid building up in the resonance chamber 22 and then discharging from the resonance chamber 22.

As the shock wave extends radially proximate the gap 30, focusing surface 16 of the housing 14 directs the shock wave downward past the resonance chamber 22, out of the lower opening 20 and towards a baghouse filter (not shown). As the shock wave moves past the resonance chamber 22, the shock wave is transformed into a ring-shaped shock wave vortex 32. In one embodiment the lower opening 20 has a diameter that is substantially similar to the diameter of a baghouse filter 80 so that the ring-shaped shock wave vortex 32 travels along the baghouse filter surface. As the ring-shaped shock wave vortex 32 contacts the baghouse filter, the energy breaks up the accumulated particulate matter stuck to the filter.

In one embodiment, the housing 14 surrounds the resonance chamber 22 on all sides with the exception of the bottom surface 24. The focusing surface 16 is formed such that it directs the ring-shaped shock wave vortex 32 out of the bottom surface 24. In one embodiment, the focusing surface 16 is a generally domed surface. In another embodiment, the focusing surface 16 is a parabolic surface. It is understood that the focusing surface 16 can be of any shape to direct the shock wave towards the bottom opening.

The resonance chamber 22 is secured to the housing 14 via at least one chamber support 18. It is understood that any number of chamber supports 18 may be used. The chamber support 18 securely retains the resonance chamber 22 in position. The chamber support 18 should be sufficiently rigid to withstand both the high pressure fluid and the shock wave generated within the housing 14 without allowing the resonance chamber 22 to substantially shift. The chamber support 18 can also be located outside the housing 14 as long as it supports the chamber 22. While the bottom surface 24 is shown as a flat surface, it is understood that the bottom surface 24 can be of any suitable shape including but not limited to a sloped surface, a curved surface, a dimpled surface or a textured surface.

FIG. 3 is a flow diagram of a method of cleaning a bag house filter according to one embodiment. In one embodiment, an acoustic generator 10 is configured as shown in FIGS. 1 and 2.

The method comprises the step 100 of delivering high pressure fluid to a housing 14 of an acoustic generator 10. In one embodiment, the high pressure fluid is delivered from a high pressure fluid source 40, through a manifold 50, and to an acoustic generator 10. Optionally, a manifold 50 provides a high pressure fluid connection for a plurality of acoustic generators 10.

In use, the acoustic generator 10 creates a shock wave at step 110. High pressure fluid is delivered from the inlet tube 12 such that the high pressure fluid enters and exits the resonance chamber 28 to form a shock wave proximate the gap.

As the high pressure fluid is delivered to the acoustic generator 10 a shock wave is created within the acoustic generator 10. The housing 14 of the acoustic generator directs the shock wave past the resonance chamber 28 to form a ring-shaped shock wave vortex at step 120. As the ring-shaped shock wave vortex 32 leaves the lower opening 20 of the housing 14, at step 130, it is directed towards a filter 80 to thereby clean the filter 80.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A baghouse filter cleaning device comprising:
a housing (14) comprising a focusing surface (16) and a lower opening (20);
an inlet tube (12) configured to transfer high pressure fluid to the housing (14); and
a resonance chamber (22) comprising an opening and a bottom surface, the resonance chamber (22) being located within the housing (14) and also being axially aligned with and spaced apart from the inlet tube (12) forming a gap (30) between the inlet tube (12) and the resonance chamber (22),
wherein the high pressure fluid delivered from the inlet tube (12) enters and exits the resonance chamber (22) in an oscillating manner to generate a shock wave proximate the gap (30), and
wherein the focusing surface (16) is configured to direct the shock wave downward around the resonance chamber (22) and through the lower opening (20) to form a ring-shaped shock wave vortex (32).

2. The baghouse filter cleaning device of claim 1, wherein the resonance chamber (22) is a tube with a diameter that is at least 90% of the diameter of the inlet tube.

3. The baghouse filter cleaning device of claim 1 or claim 2, wherein the focusing surface (16) is a domed surface, and preferably the domed surface is a generally parabolic shaped surface.

4. The baghouse filter cleaning device of claim 1, 2 or 3, wherein the housing (14) surrounds at least a portion of the inlet tube and the resonance chamber.

5. The baghouse filter cleaning device of any preceding claim, wherein the housing (14) further comprises at least one chamber support (18).

6. The baghouse filter cleaning device of any preceding claim, wherein the lower opening has a diameter that is substantially similar to the diameter of a baghouse filter.

7. A baghouse filter cleaning system comprising:
a source (40) of high pressure fluid;
a manifold (50) to deliver the high pressure fluid;
at least one filter (80); and
at least one acoustic generator (10) connected to the manifold (50) and positioned proximate the at least one filter (80), the acoustic generator (10) comprising the baghouse filter cleaning device of any preceding claim.

8. The baghouse filter cleaning system of claim 7, further comprising a valve (70) connected between the inlet tube and the manifold, and preferably the valve (70) is a two-position valve.

9. The baghouse filter cleaning system of claim 8, wherein the two-position valve has an on position that allows fluid flow and an off position that blocks fluid flow.

10. The baghouse filter cleaning system of claim 7, 8 or 9, wherein the housing (14) further comprises at least one chamber support that preferably provides a connection between the resonance chamber and the housing.

11. The baghouse filter cleaning system of claim 7, 8, 9 or 10, wherein the filter has an inner surface and out surface, the inner surface being a clean area and the outer surface being a contaminated area.

12. The baghouse filter cleaning system of any one of claims 7 to 11, wherein the ring-shaped shock wave vortex (32) oscillates at a frequency optimized to clean a baghouse filter (80) of a particular diameter, length and shape, preferably at a frequency between 40 Hz and 1000 Hz.

13. The baghouse filter cleaning system of any one of claims 7 to 12, wherein at least one of:
the number of the at least one filter is equal to the number of the at least one acoustic generator (10), each acoustic generator being proximate to one filter, and
the at least one acoustic generator is positioned above the at least one filter.

14. A method for cleaning a baghouse filter with an acoustic generator (10) comprising a housing (14) comprising a focusing surface (16) and a lower opening (20), an inlet tube (12) configured to transfer high pressure fluid to the housing (14), and a resonance chamber (22) comprising an opening (28) and a bottom surface, the resonance chamber (22) being located within the housing (14) and also being axially aligned with and spaced apart from the inlet tube (12) forming a gap (30) between the inlet tube (12) and the resonance chamber (22); the method comprising the steps of:
delivering a high pressure fluid to the housing (14) via the inlet tube (12) such that the high pressure fluid enters and exits the resonance chamber (22) to generate a shock wave proximate the gap (30);
creating a shock wave within the acoustic generator (10);
utilizing the focusing surface (16) of the housing to direct the shock wave downward past the resonance chamber (22) and through the lower opening to form a ring-shaped shock wave vortex (32); and
directing the ring-shaped shock wave vortex (32) towards a bag house filter thereby cleaning the filter.

15. The method for cleaning a baghouse filter of claim 14, further comprising the step of utilizing a multi-position valve (70) to regulate the flow of the high pressure fluid to the housing (14).
